(19) Europäisches Patentamt
European Patent Office
Office européen des brevets

(11) **EP 4 400 826 A1**

(12) **EUROPEAN PATENT APPLICATION**

(43) Date of publication:
**17.07.2024 Bulletin 2024/29**

(21) Application number: **24151175.7**

(22) Date of filing: **10.01.2024**

(51) International Patent Classification (IPC):
**G01N 15/1429** (2024.01)   **G01N 15/14** (2024.01)
**G01N 35/02** (2006.01)   **G01N 35/10** (2006.01)
**G01N 15/01** (2024.01)   **G01N 35/04** (2006.01)
**G01N 15/10** (2024.01)

(52) Cooperative Patent Classification (CPC):
**G01N 15/1459; G01N 15/1429; G01N 35/025;
G01N 35/1016; G01N 35/1095;** G01N 2015/016;
G01N 2015/1006; G01N 2015/1402;
G01N 2015/1486; G01N 2015/1493;
G01N 2035/0441; G01N 2035/0498;
G01N 2035/1034

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 JP 2023004034**

(71) Applicant: **SYSMEX CORPORATION
Kobe-shi
Hyogo 651-0073 (JP)**

(72) Inventors:
• **OZASA, Masatsugu
Kobe-shi, Hyogo, 651-0073 (JP)**
• **KINISHI, Motoi
Kobe-shi, Hyogo, 651-0073 (JP)**
• **WEIR, Clare
22848 Norderstedt (DE)**

(74) Representative: **Hoffmann Eitle
Patent- und Rechtsanwälte PartmbB
Arabellastraße 30
81925 München (DE)**

(54) **FLOW CYTOMETER AND SAMPLE MEASUREMENT METHOD**

(57)   Disclosed is a flow cytometer comprising: a flow cell; a sample supply part configured to supply, to the flow cell, a predetermined amount of a measurement sample prepared by mixing a specimen containing measurement-target substances and a labeled antibody which binds to the measurement-target substances; a light source configured to apply light to the measurement sample passing through the flow cell; a detector configured to detect lights derived from the measurement-target substances contained in the measurement sample to which the light has been applied, and output signals; and an analysis unit configured to count the measurement-target substances contained in the measurement sample on the basis of the signals and obtain a concentration of the measurement-target substances on the basis of the number of the counted measurement-target substances and the predetermined amount.

FIG. 2

EP 4 400 826 A1

**Description**

CROSS REFERENCE TO RELATED APPLICATIONS

This application claims priority from prior Japanese Patent Application No. 2023-004034, filed on January 13, 2023, entitled "FLOW CYTOMETER AND SAMPLE MEASUREMENT METHOD", the entire content of which is incorporated herein by reference.

FIELD OF THE INVENTION

The present invention relates to a flow cytometer and a sample measurement method for measuring measurement-target substances contained in a specimen.

BACKGROUND OF THE INVENTION

A flow cytometer is known as a specimen analyzer that applies light to a measurement sample prepared from a specimen containing cells and that performs measurement at high speed. The flow cytometer is a measurement device that applies light to each of particles flowing basically in one line inside a laminar flow and that obtains optical information about the individual particle.

Huroosaitometorii gijutsu jouhou, FCM no Genri Nyuumon Kouza, V Huroo Kei (provisional translation: "V Flow System" in "Introductory Lesson on Principles of FCM" of "Technical Information about Flow Cytometry") ([online], Beckman Coulter, Inc., [searched on December 15, 2022], the Internet <URL: https://www.bccytometry.com/FCM/fcmprinciple_5.html>) discloses a flow cytometer for measuring cells in a measurement sample. The conventional flow cytometer disclosed in Huroosaitometorii gijutsu jouhou, FCM no Genri Nyuumon Kouza, V Huroo Kei (provisional translation: "V Flow System" in "Introductory Lesson on Principles of FCM" of "Technical Information about Flow Cytometry") ([online], Beckman Coulter, Inc., [searched on December 15, 2022], the Internet <URL: https://www.bccytometry.com/FCM/fcmprinciple_5.html>) introduces air into a sample container that contains a measurement sample in liquid form and that is capped with a lid so as to prevent air from escaping. Accordingly, this flow cytometer decreases the height of the liquid surface of the measurement sample by the pressure of the air, thereby supplying the measurement sample to a flow cell. Optical measurement parameters are obtained from the cells in the measurement sample supplied to the flow cell in this manner. The flow cytometer plots the cells onto a two-dimensional histogram on the basis of the measurement parameters and displays the percentage of cells included in a specific region of the histogram among all the cells (Huroosaitometorii gijutsu jouhou, FCM no Genri Nyuumon Kouza, VIII. Deeta Syori Kei (provisional translation: "VIII. Data Processing System" in "Introductory Lesson on Principles of FCM" of "Technical Information about Flow Cytometry") ([online], Beckman Coulter, Inc., [searched on December 15, 1992], the Internet <https://www.bccytometry.com/FCM/fcmprinciple_8-1.html>)).

Among tests in which flow cytometers are used, there is a test in which the concentration of cells in a specimen or a measurement sample needs to be provided as a test result. For example, regarding CD4 positive cells serving as an index of the immunocompetence of an HIV-infected person, it is said that, when the concentration of the CD4 positive cells in blood of an infected person becomes lower than 200 cells/$\mu$L, the infected person becomes more likely to contract various opportunistic infections. Considering this, the preventive treatment to be performed differs according to the concentration of the CD4 positive cells in blood.

In the conventional flow cytometer, the amount of the measurement sample to be supplied to the flow cell differs according to change in the environmental temperature or the liquid surface of the measurement sample in the sample container. Thus, the amount of the measurement sample having been supplied to the flow cell cannot be accurately measured, whereby, for example, the number of target cells contained in 1 $\mu$L of the measurement sample cannot be obtained. Against this drawback, in the case of, for example, obtaining the concentration of target cells such as CD4 cells with use of the flow cytometer, the concentration of the target cells is obtained by: mixing a standard sample containing beads having a known concentration with the measurement sample in equal amounts, to prepare a liquid mixture; and obtaining the ratio of the number of the target cells to the number of the beads in the liquid mixture.

However, measurement using a standard sample involves many manual operations for preparing such a liquid mixture, resulting in complexity in preparation of a measurement sample. In addition, the involvement of manual operations leads to a problem that the measurement accuracy varies. For example, a standard sample needs to be stirred before being mixed with a specimen, and, when the stirring is insufficient, a concentration gradient of beads occurs in the standard sample. In this case, when the standard sample is mixed with the specimen without eliminating the concentration gradient, accurate concentration conversion cannot be performed. This could cause variation in the measurement accuracy.

The present invention has been made in view of the problem, and an object of the present invention is to provide a flow cytometer capable of obtaining a concentration of target cells without using a standard sample.

SUMMARY OF THE INVENTION

The present invention provides a flow cytometer including:

a flow cell;
a sample supply part configured to supply, to the flow cell, a predetermined amount of a measurement sample prepared by mixing a specimen containing measurement-target substances and a labeled antibody which binds to the measurement-target substances;
a light source configured to apply light to the measurement sample passing through the flow cell;
a detector configured to detect lights derived from the measurement-target substances contained in the measurement sample to which the light has been applied, and output signals; and
an analysis unit configured to count the measurement-target substances contained in the measurement sample on the basis of the signals and obtain a concentration of the measurement-target substances on the basis of the number of the counted measurement-target substances and the predetermined amount.

In addition, from a different viewpoint, the present invention provides a sample measurement method including:

supplying, to a flow cell, a predetermined amount of a measurement sample prepared by mixing a specimen containing measurement-target substances and a labeled antibody which binds to the measurement-target substances;
applying light to the measurement sample passing through the flow cell;
detecting lights derived from the measurement-target substances contained in the measurement sample to which the light has been applied, and outputting signals; and
counting the measurement-target substances contained in the specimen on the basis of the signals and obtaining a concentration of the measurement-target substances on the basis of the number of the counted measurement-target substances and the predetermined amount.

In addition, from a different viewpoint, the present invention provides a flow cytometer including:

a flow cell;
a metering syringe configured to suction a measurement sample prepared by mixing a specimen containing measurement-target substances and a labeled antibody which binds to the measurement-target substances, and supply the suctioned measurement sample to the flow cell;
a light source configured to apply light to the measurement sample passing through the flow cell;
a detector configured to detect lights derived from the measurement-target substances contained in the measurement sample to which the light has been applied, and output signals; and
an analysis unit configured to count the measurement-target substances contained in the measurement sample on the basis of the signals and obtain a concentration of the measurement-target substances on the basis of the number of the counted measurement-target substances and an amount of the measurement sample used for counting the measurement-target substances.

In addition, from a different viewpoint, the present invention provides a sample measurement method including:

supplying a measurement sample to a flow cell by a metering syringe, the measurement sample being prepared by mixing a specimen containing measurement-target substances and a labeled antibody which binds to the measurement-target substances;
applying light to the measurement sample passing through the flow cell;
detecting lights derived from the measurement-target substances contained in the measurement sample to which the light has been applied, and outputting signals; and
counting the measurement-target substances contained in the specimen on the basis of the signals and obtaining a concentration of the measurement-target substances on the basis of the number of the counted measurement-target substances and an amount of the measurement sample used for counting the measurement-target substances.

In the flow cytometer of the present invention, the predetermined amount of the measurement sample is supplied to the flow cell, and the concentration of the measurement-target substances is determined on the basis of the number of the counted measurement-target substances and the predetermined amount. Thus, no standard sample needs to be used for determining the concentration of the measurement-target substances.

BRIEF DESCRIPTION OF THE DRAWINGS

FIG. 1 is a diagram of a flow cytometer according to an embodiment of the present invention;
FIG. 2 is a schematic diagram showing a fluid circuit of the flow cytometer according to the embodiment;
FIG. 3 is a diagram for explaining a measurement optical system of the flow cytometer according to the embodiment;
FIG. 4 is a diagram for explaining a configuration example of a measurement unit of the flow cytometer according to the embodiment;
FIG. 5 is a block diagram showing a configuration example of an analysis unit of the flow cytometer according to the embodiment;
FIG. 6A is a diagram for explaining measurement data obtained by the measurement unit shown in FIG. 4;
FIG. 6B is a schematic diagram for explaining a structure of the measurement data shown in FIG. 6A;
FIG. 7 is a flowchart showing an example of a process to be executed by a controller of the analysis unit shown in FIG. 5;
FIG. 8 is a flowchart showing an example of a process to be executed by a controller of the measurement unit correspondingly to the process in FIG. 7;
FIGS. 9A to 9D show a flowchart for explaining details of step S18 in FIG. 7;
FIG. 10 is a diagram for explaining an example of a result screen displayed by a display section in FIG. 5;
FIG. 11 is the first half of a flowchart showing an example of a process to be executed by the controller of the analysis unit correspondingly to the process in FIG. 7, in embodiment 2;
FIG. 12 is the second half of the flowchart showing the example of the process to be executed by the controller of the analysis unit correspondingly to the process in FIG. 7, in embodiment 2;
FIG. 13 is a diagram for explaining an example of an operation screen presented to a user by the analysis unit in a non-metering mode, in embodiment 2;
FIG. 14 is a diagram for explaining an example of a quality control setting screen, displaying of which is caused by the controller of the analysis unit, in embodiment 4;
FIG. 15 is a diagram for explaining an example of a quality control setting screen in a style different from that in FIG. 14;
FIG. 16 is a diagram for explaining an example of a control chart screen, displaying of which is caused by the controller of the analysis unit, in embodiment 5; and
FIG. 17 is a diagram for explaining an aspect in which specimen analyzers of respective users are connected to a server to perform external quality control, in embodiment 5.

DETAILED DESCRIPTION

Hereinafter, the present disclosure will be further described in detail with reference to the drawings. The following description is merely illustrative in all aspects, and should not be considered as restricting the present disclosure.

(Embodiment 1)

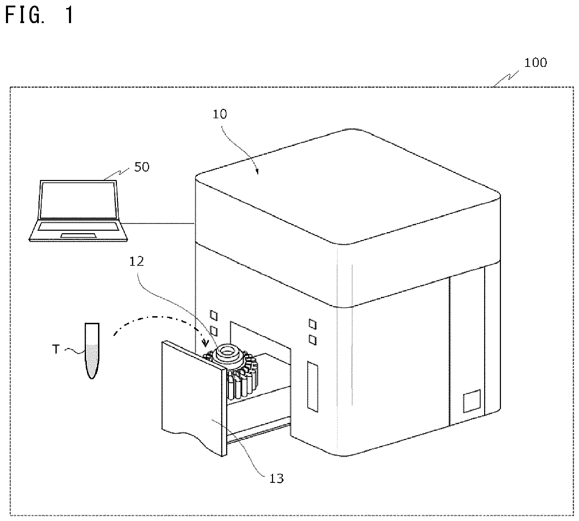

FIG. 1 is a diagram of a flow cytometer 100 according to an embodiment of the present disclosure. The flow cytometer 100 shown in FIG. 1 is a device that performs flow cytometry to optically measure: the number of particles dispersed in a measurement sample contained in a sample container T; the sizes and the structures of the individual particles; and characteristics of the particles. The number, the sizes, and properties of the particles can be obtained on the basis of information having been optically detected.
The measurement sample is prepared by mixing a specimen containing measurement-target substances and an antibody reagent containing fluorescence-labeled antibodies. The measurement sample may further contain a hemolyzing reagent for hemolyzing red blood cells in the specimen. The prepared measurement sample is contained in the sample container T, and the sample container T is set by a user onto a rack 12 for the flow cytometer 100 as indicated by an alternate long and short dash line in FIG. 1.
The specimen is blood (whole blood) and more specifically peripheral blood. The specimen is collected from a patient. The measurement-target substances are blood cells, more specifically white blood cells, and even more specifically lymphocytes. On the lymphocytes, various cell surface antigens (CD antigens) such as CD3, CD4, CD8, CD16, CD19, CD45, and CD56 are expressed. The lymphocytes are known to be classifiable into different subtypes according to the types of the expressed antigens. For example, regarding the lymphocytes, there are subsets called T cells, helper T cells, killer T cells, B cells, and NK cells. The T cells are CD3 positive cells. The helper T cells are CD3 positive, CD4 positive, and CD8 negative cells. The killer T cells are CD3 positive, CD8 positive, and CD4 negative cells. The B cells are CD19 positive, CD16 negative, and CD56 negative cells. The NK cells are CD3 negative, CD16 positive or CD56 positive, and CD19 negative cells. These subsets of lymphocytes are collectively referred to as TBNK, and a test for ascertaining the number of cells belonging to any of these subsets of lymphocytes is referred to as a TBNK test. The TBNK test is used for, for example, typing of leukemia. The flow cytometer 100 is installed in a hospital, a test facility, or the like and is used for such a cell classifying test.

The antibody reagent is a reagent containing labeled antibodies which bind to the surface antigens on cells. For example, an antibody reagent for use in the above TBNK test contains seven types of antibodies which are a CD3 antibody, CD16/56 antibodies, a CD4 antibody, a CD 19 antibody, a CD8 antibody, and a CD45 antibody which have been fluorescence-labeled, in order to classify lymphocytes into five types and obtaining the number of lymphocytes of each type. The CD45 antibody is a labeled antibody that specifically binds to the CD45 antigen expressed on white blood cells including lymphocytes, and is used for gating to specify lymphocytes in the specimen by combining fluorescence information and scattered light information. When the antibody reagent and the specimen are mixed with each other, the labeled antibodies specifically bind to the respective surface antigens on the lymphocytes. The labeled antibodies contain respective fluorescent substances that, by being excited, emit fluorescences having wavelengths different from one another. On cells (positive cells) to which antibodies have bound, respective fluorescent substances with which the antibodies have been labeled are excited by lights from light sources described later so as to emit different combinations of fluorescences.

As the fluorescent labels, there are six types of fluorescent labels which are FITC, PE, PEcy5, PEcy7, APC, and APCcy7. In the case of using these six types of fluorescent labels, for example, the CD16/56 antibodies, i.e., the CD16 antibody and the CD56 antibody, can be labeled with the same fluorescent label.

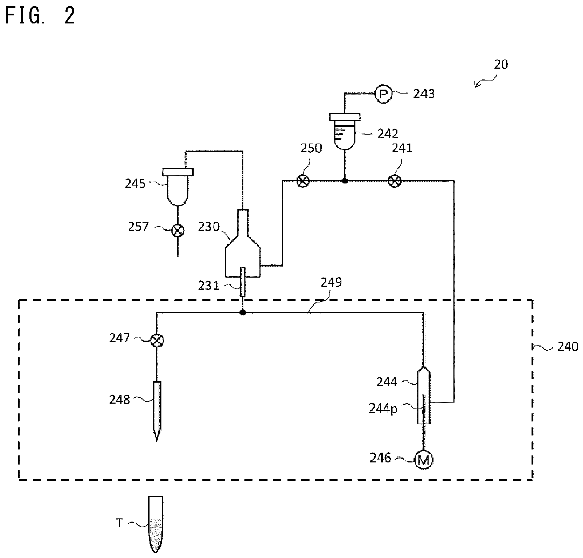

The flow cytometer 100 shown in FIG. 1 includes a measurement unit 10 and an analysis unit 50 which is an information processing device connected to the measurement unit 10. The measurement unit 10 of the flow cytometer 100 has a rack 12 which supports a plurality of the sample containers T. The rack 12 is provided in a drawable accommodation part 13. When the accommodation part 13 having the rack 12 on which the sample containers T are placed as shown in FIG. 1 is inserted into the measurement unit 10 from the position to which the accommodation part 13 has been drawn out from the measurement unit 10, the rack 12 is located at a position accessible to a suction nozzle 248 (see FIG. 2) of a sample supply part 240 described later. The measurement unit 10 suctions a measurement sample in each of the sample containers T supported on the rack 12, supplies a predetermined amount of the measurement sample to a flow cell 230 (see FIG. 2), obtains optical information from cells in the measurement sample through flow cytometry, and provides measurement data based on the optical information to the analysis unit 50. The analysis unit 50 analyzes the measurement data provided from the measurement unit 10, counts target cells on the basis of the measurement data, and calculates a concentration of the cells on the basis of the number of the counted cells and the predetermined amount of the measurement sample supplied to the flow cell 230. The phrase "calculates a concentration of the cells on the basis of the predetermined amount" encompasses not only calculating the concentration according to the predetermined amount of the measurement sample supplied to the flow cell 230 but also calculating the concentration according to an amount based on the predetermined amount. The amount based on the predetermined amount is, for example, an amount that is a certain percent (e.g., 30%) of the predetermined amount. In order to calculate a concentration of the cells on the basis of the predetermined amount, the analysis unit 50 may use the value of a predetermined amount included in the measurement condition transmitted to the measurement unit 10 and may obtain the amount of the measurement sample actually supplied to the flow cell 230 by the measurement unit 10.

FIG. 2 is a schematic diagram showing an example of a fluid circuit provided to the measurement unit 10. A fluid circuit 20 shown in FIG. 2 includes: the flow cell 230; the sample supply part 240 which supplies the measurement sample to the flow cell 230; an ejection nozzle 231 through which the measurement sample supplied from the sample supply part 240 is jetted toward the flow cell 230; a sheath liquid chamber 242 storing therein a sheath liquid; a pressure device 243 which applies a positive pressure to the sheath liquid chamber 242; and a waste liquid chamber 245.

The sample supply part 240 includes: the suction nozzle 248 which suctions the measurement sample; and a metering syringe 244. The sample supply part 240 further includes a main flow path 249 as a flow path connecting the suction nozzle 248, the flow cell 230, and the metering syringe 244 to each other. A valve 247 which opens/closes the main flow path 249 is provided between the flow cell 230 and the suction nozzle 248.

The metering syringe 244 includes a piston 244p which is moved inside a tubular syringe container. The piston 244p is moved in a suction direction and an ejection direction owing to drive force of a motor 246. Here, the suction direction is a direction in which the piston 244p is pulled out from the metering syringe 244, and the ejection direction is a direction opposite to the suction direction and is a direction in which the piston 244p is inserted into the metering syringe 244. In FIG. 2, the motor 246 is a stepping motor. However, the motor 246 is not limited thereto as long as the position of an axis (rotation angle) can be controlled. For example, an encoder-equipped DC motor may be used.

The sample supply part 240 can supply a predetermined amount of the measurement sample to the flow cell 230 by the metering syringe 244. The predetermined amount is an amount by which the metering syringe 244 sends out the measurement sample with one stroke. The predetermined amount is obtained as the product of the movement amount of the piston 244p and the cross-sectional area, at a hollow portion, of the syringe container of the metering syringe 244. In a case where a measurement item is TBNK, the predetermined amount is 250 μL. The movement amount of the piston 244p is proportional to the rotation amount of the motor 246, and the rotation amount of the motor 246 can be controlled according to the number of pulses to be applied. Thus, the predetermined amount of the measurement sample is supplied to the flow cell 230 by applying a certain number of pulses to the motor 246.

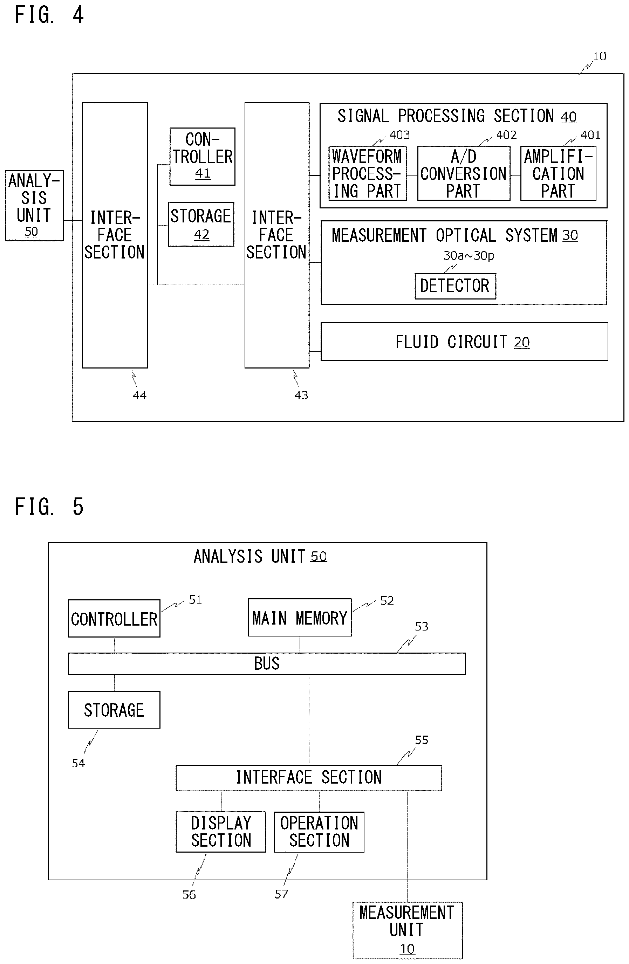

The fluid circuit 20 includes valves 241, 250, and 257 in addition to the aforementioned valve 247. The motor 246, the pressure device 243, and the valves are electrically connected via an interface section 43 described later with reference to FIG. 4 to a controller 41 also described later with reference to FIG. 4.

Operations performed when the measurement sample in the sample container T is supplied to the flow cell 230 by the fluid circuit 20 will be described. The following operations are each realized through control, of each part, by the controller 41 described later with reference to FIG. 4. First, the suction nozzle 248 is lowered such that the tip thereof is inserted to a bottom portion of the sample container T, and the valve 247 on the main flow path 249 is opened. In a pre-suction state, the main flow path 249 is filled with the sheath liquid. The motor 246 is driven by a predetermined rotation amount such that the piston 244p is moved in the suction direction by a predetermined amount. Through this operation, a negative pressure is generated inside the metering syringe 244, the sheath liquid is suctioned into the syringe container owing to the generated negative pressure, and the measurement sample is suctioned from the tip of the suction nozzle 248. The suctioned measurement sample passes through the valve 247 and fills the main flow path 249 between the suction nozzle 248 and the metering syringe 244.

After the main flow path 249 is filled with the measurement sample, the valve 247 on the main flow path 249 is closed. Subsequently, the valve 250 on a flow path connecting the sheath liquid chamber 242 and the flow cell 230 to each other is opened, and the pressure device 243 is actuated. Owing to a pressure generated by the actuation of the pressure device 243, the sheath liquid stored in the sheath liquid chamber 242 is sent out to the flow cell 230. A laminar flow of the sheath liquid is formed inside the flow cell 230. The sheath liquid having passed through the flow cell 230 is discharged to the waste liquid chamber 245. In a state where the laminar flow of the sheath liquid is formed, the motor 246 is driven such that the piston 244p of the metering syringe 244 is moved at a fixed speed in the ejection direction. In association with the movement of the piston 244p, the measurement sample filling the main flow path 249 is, in a fixed amount per hour, ejected from the ejection nozzle 231 and supplied to the flow cell 230. The amount of the measurement sample supplied to the flow cell 230 at this time is obtained as the product of the cross-sectional area, at the hollow portion, of the syringe container of the metering syringe 244 and the movement amount of the piston 244p in the ejection direction. That is, the liquid amount of the measurement sample to be supplied from the main flow path 249 to the flow cell 230 can be accurately regulated on the basis of the rotation amount of the motor 246. The amount, per hour, of the measurement sample to be supplied to the flow cell does not have to be fixed and may be variable as long as the amount of the supply to the flow cell per measurement sample is fixed. Regardless of the amount of the supply per hour, the amount of the measurement sample can be regulated on the basis of the movement amount of the piston 244p from the start of supply of the measurement sample to the end of the supply.

The measurement sample ejected from the ejection nozzle 231 passes through the flow cell 230 so as to be narrowed by the sheath liquid flowing around the measurement sample. Then, this measurement sample is discharged to the waste liquid chamber 245 together with the sheath liquid. Lights are applied from light sources of a measurement optical system 30 described later to the measurement sample having been narrowed by the sheath liquid, whereby optical measurement of particles contained in the measurement sample is performed. When the piston 244p finishes moving in the ejection direction by the predetermined amount, supply of the measurement sample to the flow cell 230 is ended.

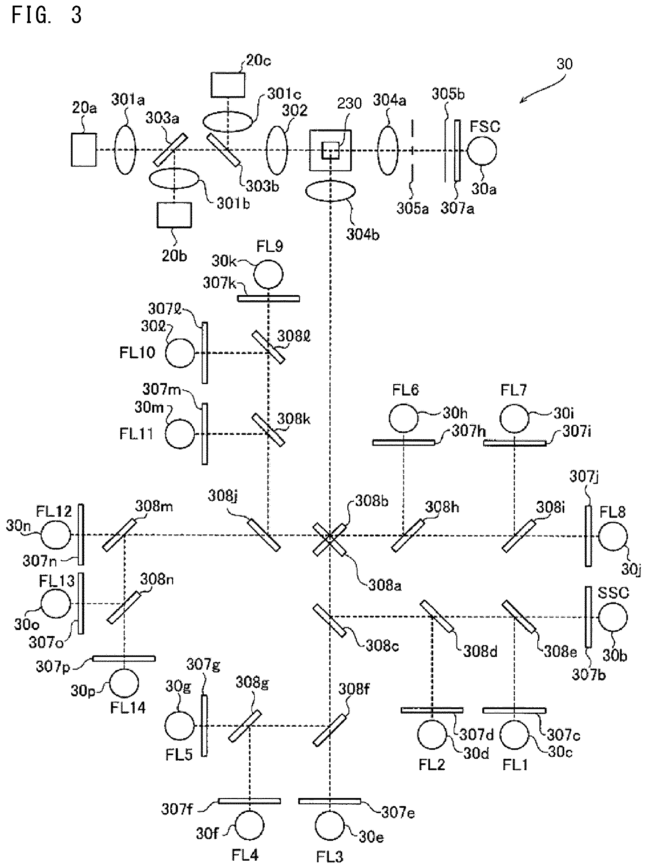

FIG. 3 shows a configuration example of the measurement optical system 30 provided to the measurement unit 10. FIG. 3 is a plan view of the measurement optical system 30 and shows a cross section of the flow cell 230. In FIG. 3, the measurement sample flows inside the flow cell 230 in an upward direction perpendicular to the drawing sheet.

The measurement optical system 30 includes light sources 20a, 20b, and 20c and detectors 30a to 30p. The light sources 20a to 20c apply lights to the measurement sample passing through the flow cell 230. The detectors 30a to 30p detect lights from the sample and output detection signals converted into electric signals. The detector 30a is a detector for detecting forward scattered light, and the detector 30b is a detector for detecting side scattered light. The detector 30a and the detector 30b are photodiodes. The detectors 30c, 30d, 30e, 30f, 30g, 30h, 30i, 30j, 30k, 30l, 30m, 30n, 30o, and 30p are detectors for detecting fluorescences. The detectors 30c to 30p are photomultiplier tubes (PMT).

The light sources 20a to 20c emit lights having wavelengths different from one another. The light source 20a emits a light having a center wavelength of about 488 nm. The light source 20b emits a light having a center wavelength of about 642 nm. The light source 20c emits a light having a center wavelength of about 405 nm. The light emitted from the light source 20a is transmitted through a collimator lens 301a, dichroic mirrors 303a and 303b, and a condenser lens 302, to be applied to the flow cell 230. The light emitted from the light source 20b is transmitted through a collimator lens 301b, reflected by the dichroic mirror 303a, transmitted through the dichroic mirror 303b, and transmitted through the condenser lens 302, to be applied to the flow cell 230. The light emitted from the light source 20c is transmitted through a collimator lens 301c, reflected by the dichroic mirror 303b, and transmitted through the condenser lens 302, to be applied to the flow cell 230.

Forward scattered light which is a light derived from the sample passing through the flow cell 230 is transmitted through a condenser lens 304a, a beam stopper 305a, a pinhole plate 305b, and a band-pass filter 307a, to enter the detector 30a.

Side scattered light and fluorescences which are lights derived from each of the particles contained in the sample passing through the flow cell 230 are condensed by a condenser lens 304b. The side scattered light to enter the detector 30b is, from the condenser lens 304b, transmitted through dichroic mirrors 308a and 308b, reflected by a dichroic mirror 308c, and transmitted through dichroic mirrors 308d and 308e and a band-pass filter 307b, to enter the detector 30b.

The fluorescences to enter the respective detectors 30c to 30p are separated to have mutually different wavelength bands by dichroic mirrors 308a to 308n. The fluorescence to enter the detector 30c is, from the condenser lens 304b, transmitted through the dichroic mirrors 308a and 308b, reflected by the dichroic mirror 308c, transmitted through the dichroic mirror 308d, reflected by the dichroic mirror 308e, and transmitted through a band-pass filter 307c, to enter the detector 30c. The fluorescence to enter the detector 30d is, from the condenser lens 304b, transmitted through the dichroic mirrors 308a and 308b, reflected by the dichroic mirror 308c, reflected by the dichroic mirror 308d, and transmitted through a band-pass filter 307d, to enter the detector 30d.

The fluorescence to enter the detector 30e is, from the condenser lens 304b, transmitted through the dichroic mirrors 308a, 308b, 308c, and 308f and transmitted through a band-pass filter 307e, to enter the detector 30e. The fluorescence to enter the detector 30f is, from the condenser lens 304b, transmitted through the dichroic mirrors 308a, 308b, and 308c, reflected by the dichroic mirror 308f, reflected by the dichroic mirror 308g, and transmitted through a band-pass filter 307f, to enter the detector 30f.

The fluorescence to enter the detector 30g is, from the condenser lens 304b, transmitted through the dichroic mirrors 308a, 308b, and 308c, reflected by the dichroic mirror 308f, and transmitted through the dichroic mirror 308g and a band-pass filter 307g, to enter the detector 30g. The fluorescence to enter the detector 30h is, from the condenser lens 304b, reflected by the dichroic mirror 308a, transmitted through the dichroic mirror 308b, reflected by the dichroic mirror 308h, and transmitted through a band-pass filter 307h, to enter the detector 30h.

The fluorescence to enter the detector 30i is, from the condenser lens 304b, reflected by the dichroic mirror 308a, transmitted through the dichroic mirrors 308b and 308h, reflected by the dichroic mirror 308i, and transmitted through a band-pass filter 307i, to enter the detector 30i. The fluorescence to enter the detector 30j is, from the condenser lens 304b, reflected by the dichroic mirror 308a, transmitted through the dichroic mirrors 308b, 308h, and 308i, and transmitted through a band-pass filter 307j, to enter the detector 30j.

The fluorescence to enter the detector 30k is, from the condenser lens 304b, reflected by the dichroic mirror 308b, transmitted through the dichroic mirror 308a, reflected by the dichroic mirror 308j, and transmitted through the dichroic mirrors 308k and 308l and a band-pass filter 307k, to enter the detector 30k. The fluorescence to enter the detector 30l is, from the condenser lens 304b, reflected by the dichroic mirror 308b, transmitted through the dichroic mirror 308a, reflected by the dichroic mirror 308j, transmitted through the dichroic mirror 308k, reflected by the dichroic mirror 308l, and transmitted through a band-pass filter 307l, to enter the detector 30l.

The fluorescence to enter the detector 30m is, from the condenser lens 304b, reflected by the dichroic mirror 308b, transmitted through the dichroic mirror 308a, reflected by the dichroic mirror 308j, reflected by the dichroic mirror 308k, and transmitted through a band-pass filter 307m, to enter the detector 30m. The fluorescence to enter the detector 30n is, from the condenser lens 304b, reflected by the dichroic mirror 308b, transmitted through the dichroic mirror 308a, and transmitted through the dichroic mirrors 308j and 308m and a band-pass filter 307n, to enter the detector 30n.

The fluorescence to enter the detector 30o is, from the condenser lens 304b, reflected by the dichroic mirror 308b, transmitted through the dichroic mirror 308a, transmitted through the dichroic mirror 308j, reflected by the dichroic mirror 308m, reflected by the dichroic mirror 308n, and transmitted through a band-pass filter 307o, to enter the detector 30o. The fluorescence to enter the detector 30p is, from the condenser lens 304b, reflected by the dichroic mirror 308b, transmitted through the dichroic mirror 308a, transmitted through the dichroic mirror 308j, reflected by the dichroic mirror 308m, transmitted through the dichroic mirror 308n, and transmitted through a band-pass filter 307p, to enter the detector 30p.

Each of the detectors 30a to 30p outputs a detection signal based on the intensity of the corresponding light having been received. The outputted detection signal is transmitted to a signal processing section 40 described later, and a parameter such as a light intensity is obtained from the detection signal.

FIG. 4 is a block diagram schematically showing a configuration of the measurement unit 10. The measurement unit 10 includes the fluid circuit 20 shown in FIG. 2, the measurement optical system 30 shown in FIG. 3, the signal processing section 40, the controller 41, a storage 42, the interface section 43, and an interface section 44.

The signal processing section 40 is a circuit for processing the signals outputted from the respective detectors 30a to 30p of the measurement optical system 30 shown in FIG. 3. The signal processing section 40 includes: an amplification part 401 which amplifies analog detection signals outputted from the respective detectors 30a to 30p of the measurement optical system 30; an A/D conversion part 402 which converts the amplified detection signals into digital signals; and a waveform processing part 403 which extracts, on the basis of the detection signals regarding the individual cell, feature parameters from the digital signals obtained through the A/D conversion. The feature parameters extracted from the individual cell are stored as measurement data in the storage 42.

The controller 41 is a CPU. The controller 41 executes a program stored in the storage 42, to control the fluid circuit 20, the measurement optical system 30, and the signal processing section 40. Alternatively, the controller 41 may be a programmable FPGA or ASIC. The controller 41 is communicably connected to the analysis unit 50 via the interface section 44 and can transmit the measurement data stored in the storage 42 to the analysis unit 50. The interface section 43 functions as a drive circuit and operates each part (e.g., the pressure device 243, the motor 246, and the valves 241, 247, 250, and 257) of the fluid circuit 20 and the light sources 20a to 20c of the measurement optical system 30 according to a control signal from the controller 41.

FIG. 5 is a block diagram showing a configuration example of the analysis unit 50. The analysis unit 50 is implemented by, for example, a personal computer. The analysis unit 50 includes a controller 51, a main memory 52, a bus 53, a storage 54, an interface section 55, a display section 56, and an operation section 57. The controller 51 is, for example, a CPU and is connected to the main memory 52, the storage 54, and the interface section 55 via the bus 53. The controller 51 is electrically connected to the measurement unit 10 via the interface section 55. An example of the interface applied to connection to the measurement unit 10 is a universal serial bus (USB) interface. The controller 51 loads a processing program prestored in the storage 54 onto the main memory 52 and executes the processing program, whereby the controller 51 controls each section of the analysis unit 50.

The storage 54 stores therein analysis programs to be executed by the controller 51 and data to be used for executing a process. The analysis programs include a program to be executed as an application program by the controller 51, to perform a process by the analysis unit 50. The storage 54 further stores therein a measurement condition for causing the measurement unit 10 to execute measurement corresponding to a measurement item. The storage 54 further stores therein: the measurement data transmitted from the measurement unit 10; and data of a result of analysis performed using the measurement data by the analysis unit 50 (also referred to as analysis data). The operation section 57 is implemented by, for example, a keyboard, a mouse, a touch panel, etc., and allows a signal corresponding to an operation by a user to be inputted to the controller 51. The display section 56 is, for example, a liquid crystal display and displays the analysis data obtained by the analysis unit 50.

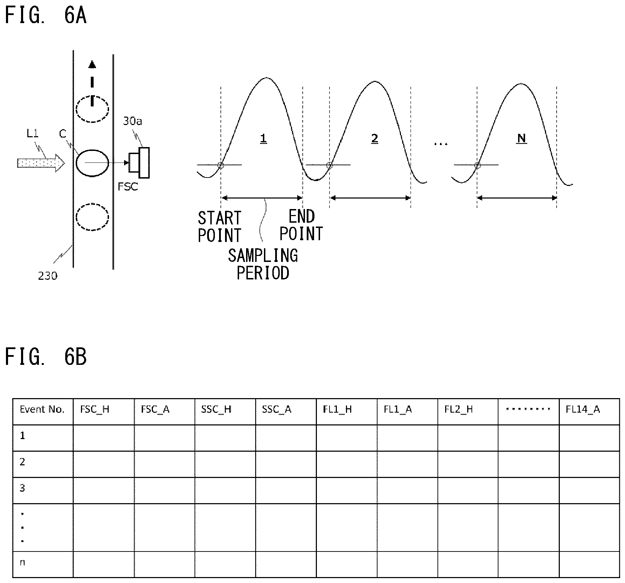

FIG. 6A is a diagram for explaining the measurement data obtained by the measurement unit 10. FIG. 6A schematically shows a situation in which a detector detects optical information from a cell C to which light L1 has been applied. As a representative example, the waveform of a detection signal of forward scattered light (FSC) detected by the detector 30a is schematically shown. The same applies to detection signals of side scattered light and side fluorescences having respective wavelengths detected by the other detectors 30b to 30p. As shown in FIG. 6A, when the cell C passes through the flow cell 230, the position of the light L1 applied to the cell C is changed over time, whereby the intensity of the forward scattered light received by the detector 30a is also changed over time. Consequently, a detection signal in the form of a wave having one pulse is outputted from the detector 30a correspondingly to the one cell.

The amplification part 401 amplifies the detection signal from the detector 30a and inputs the amplified detection signal to the A/D conversion part 402. When the detection signal (voltage) of the FSC exceeds a predetermined threshold value, the A/D conversion part 402 converts the waveform signal at a portion thereof corresponding to the cell into a digital signal over a predetermined sampling period in a predetermined cycle. The waveform processing part 403 calculates, from the digital signal obtained through the conversion, feature parameters indicating morphological features of the individual particle. Each of the feature parameters is, for example, a pulse peak height (also referred to as an intensity), a pulse width, or a pulse area. A method for calculating each of the feature parameters is disclosed in, for example, U.S. Patent No. 10261072. During the above sampling period, the same process is performed also on the detection signals of the side scattered light and the fluorescences from the other respective detectors 30b to 30p. That is, for the detection signals from the other respective detectors 30b to 30p as well, conversion into digital signals by the A/D conversion part 402 and calculation of feature parameters are performed until the predetermined sampling period elapses from when the detection signal of the FSC exceeds the threshold value. The feature parameters based on the detection signals of FSC, SSC, and FL1 to FL14 corresponding to the one cell are associated with one another as one data set and are stored in the storage 42 as measurement data.

FIG. 6B is a schematic diagram for explaining a data structure of the measurement data. In FIG. 6B, data pieces of feature parameters regarding a plurality of cells contained in the measurement sample are shown in a tabular form. The measurement data is composed of data sets corresponding to the respective individual cells. In FIG. 6B, the data set regarding each one of the cells corresponds to one row. The heads of the respective rows are assigned with event numbers, and the values of 1, 2, 3 ···, and n are entered at the heads in the order of passage through the flow cell 230. In each column, the value of a feature parameter regarding each of the cells is entered. For example, in the column "FSC_H", the peak height of the detection signal of the forward scattered light (FSC) is entered. In the column "FSC_A", the pulse area of the detection signal of the forward scattered light (FSC) is entered. In FIG. 6B, the FSC, SSC, and FL1 to FL14 represent the types of the detection signals, and the alphabet (H or A) subsequent to the underscore which comes after each of the FSC, SSC, and FL1 to FL14 represents the type of a feature parameter. H represents peak height, and A represents area. The data sets created for the n cells contained in the measurement sample are transmitted as one piece of measurement data from the measurement unit 10 to the analysis unit 50.

<Operation of Flow Cytometer 100>

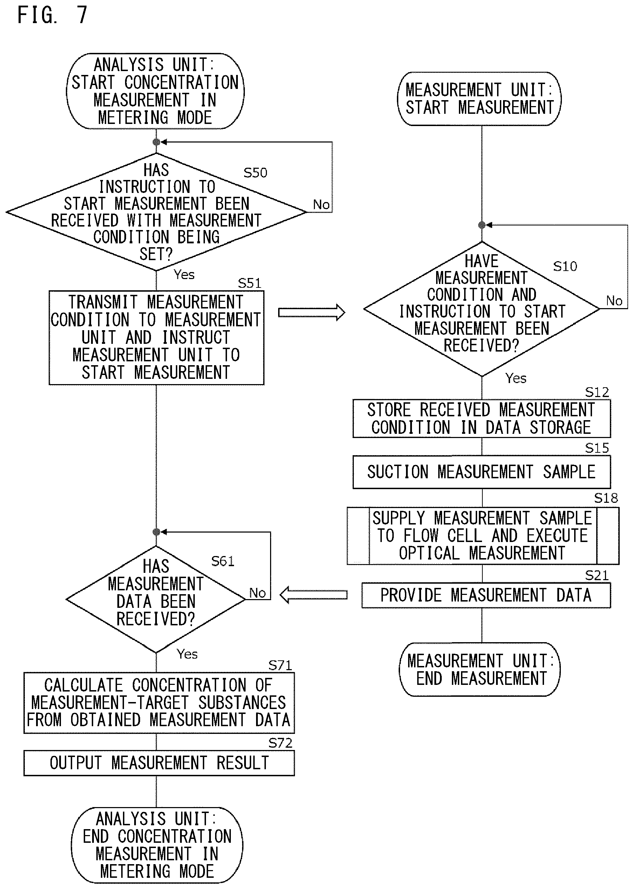

FIG. 7 is a flowchart showing operation of the flow cytometer 100. The controller 51 of the analysis unit 50 receives a measurement item related to a sample measurement to be executed and an instruction to start measurement, from a user via the operation section 57 (step S50). The measurement item is, for example, a TBNK panel. In a case where the measurement item and the instruction to start measurement have been received (Yes in step S50), the controller 51 transmits a measurement condition to the controller 41 of the measurement unit 10 so as to instruct the measurement unit 10 to start measurement (step S51).

The controller 41 of the measurement unit 10 determines whether or not a measurement condition and an instruction to start measurement have been received (step S10). In a case where a measurement condition and an instruction to start measurement have been received (Yes in step S10), the controller 41 stores the received measurement condition in the storage 42 (step S12). When the measurement condition is stored in the storage 42, the controller 41 controls the fluid circuit 20 to suction the measurement sample from the sample container T (step S15). The step for suctioning from the sample container T is performed as described with reference to FIG. 2. The controller 41 causes the piston 244p to move in the suction direction by a predetermined amount, to suction a predetermined amount of the measurement sample contained in the sample container T. The amount of the measurement sample to be suctioned is, for example, 250 $\mu$L. When suction of the measurement sample is ended, the controller 41 controls the fluid circuit 20 to supply the suctioned measurement sample to the flow cell 230 and controls the measurement optical system 30 to perform optical measurement on the measurement sample flowing through the flow cell 230 (step S18).

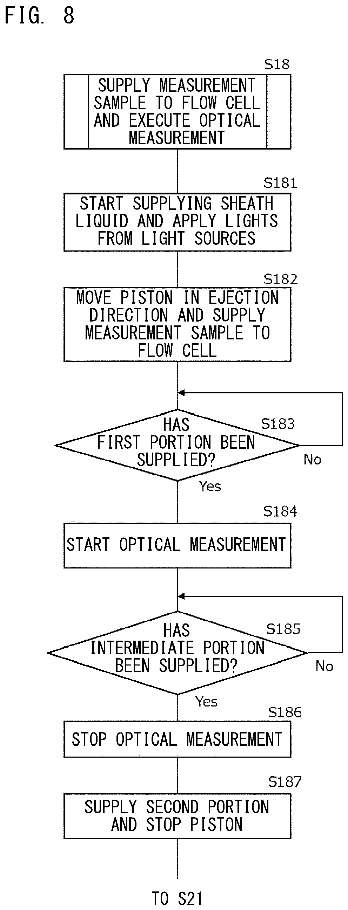

Details of step S18 will be described with reference to FIG. 8. In step S181, the controller 41 controls the pressure device 243 to start supplying the sheath liquid to the flow cell 230. The controller 41 causes the light sources 20a to 20c to start applying lights toward the flow cell 230.

In step S182, the controller 41 causes the piston 244p to move in the ejection direction at a predetermined speed, to supply the measurement sample to the flow cell 230. Optical measurement has not been started at this stage. When the supply to the flow cell is started, the controller 41 determines whether or not the supply of a portion (first portion) of the measurement sample that is to be supplied first to the flow cell 230 has been completed (step S183). The first portion is the initial portion that is 10% (25 $\mu$L of 250 $\mu$L) of the measurement sample. Whether or not the supply of the first portion has been completed is determined on the basis of whether or not the rotation amount of the motor 246 has reached a predetermined amount (a rotation amount corresponding to 25 $\mu$L). In a case where the supply of the first portion has not been completed (No in step S183), the controller 41 returns the process to step S182 and repeats the determination until the supply is completed. Meanwhile, in a case where the supply of the first portion has been completed, the controller 41 causes start of optical measurement (step S184).

The start of optical measurement refers to start of a process of constructing measurement data (FIG. 6B) on the basis of detection signals based on the amounts of lights (forward scattered light, side scattered light, and fluorescences) that are emitted from the measurement sample having received lights and that are received by the detectors 30a to 30p. In step S184, the controller 41 causes start of: outputting of the detection signals by the detectors 30a to 30p; and construction of the measurement data based on the detection signals. The reason for delaying the timing of starting optical measurement relative to the timing of supplying the measurement sample is because there is a possibility that the first portion, i.e., a portion of the measurement sample that is near the ejection nozzle 231, has been diluted by being mixed with the sheath liquid. Considering this possibility, this delaying is performed for excluding the foremost portion from a concentration-calculation target, to enable accurate measurement of the concentration of the measurement-target substances. As described later, a portion (second portion) of the measurement sample that is to be supplied last to the flow cell 230 is also excluded from the concentration-calculation target. This is because there is a possibility that the second portion has also been diluted with the sheath liquid. That is, optical measurement of the measurement sample is performed on the intermediate portion that is not diluted with the sheath liquid and that is obtained by excluding the first portion to be supplied first to the flow cell 230 and the second portion to be supplied last to the flow cell 230. The second portion is the last portion that is 60% (150 $\mu$L of 250 $\mu$L) of the measurement sample, and the intermediate portion is the remaining portion obtained by excluding the first portion and the second portion from the entirety of the suctioned measurement sample, i.e., a portion that is 30% (75 $\mu$L of 250 $\mu$L) of the measurement sample. Here, an example in which outputting of the detection signals by the detectors 30a to 30p and construction of the measurement data are simultaneously started has been described. However, the timing of starting optical measurement may be controlled by: first starting outputting of the detection signals by the detectors 30a to 30p and extraction of feature parameters by the signal processing section 40; and suspending storing of the data into the storage 42 until optical measurement is started in step S184.

During the optical measurement, a row is added to the measurement data shown in FIG. 6B every time a cell in the measurement sample passes through the flow cell 230. The measurement data is stored in the storage 42. In step S184, the controller 41 determines whether or not the supply of the intermediate portion has been completed. Whether or not the supply of the intermediate portion has been completed is determined on the basis of whether or not the rotation amount of the motor 246 has reached a predetermined amount, i.e., an amount obtained by further adding a rotation amount corresponding to 75 μL to the rotation amount at which the supply of the first portion has been completed. In a case where the supply of the intermediate portion has not been completed (No in step S185), the controller 41 returns the process to step S185 and causes the optical measurement of the measurement sample to continue until the supply of the intermediate portion is completed. Meanwhile, in a case where the supply of the intermediate portion has been completed (Yes in step S185), the controller 41 advances the process to step S186.

In step S186, the controller 41 stops the optical measurement. More specifically, the controller 41 stops: the outputting of the detection signals by the detectors 30a to 30p; and the construction of the measurement data based on the detection signals. The supply of the measurement sample to the flow cell 230 continues even after the optical measurement. In step S187, when the supply of the remaining portion, i.e., the second portion, of the measurement sample to the flow cell 230 is completed, the controller 41 causes the piston 244p to stop, and the supply of the measurement sample is ended. When the processing in step S187 is ended, the controller 41 advances the process to step S21 in FIG. 7.

With reference back to FIG. 7, the controller 41 transmits the measurement data stored in the storage 42 to the controller 51 of the analysis unit 50 (step S21).

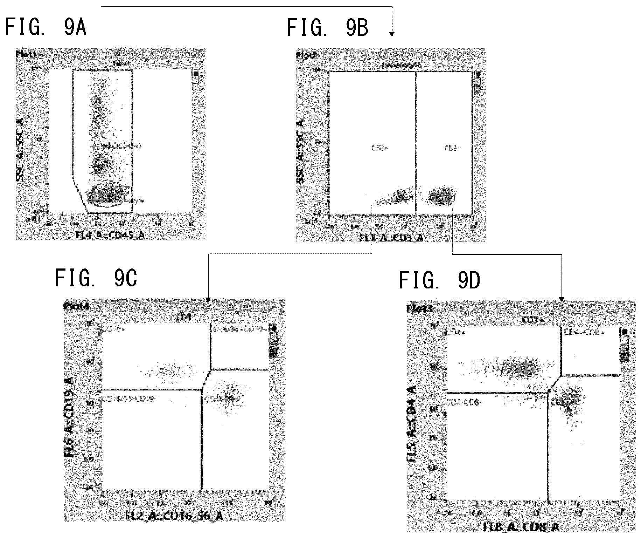

When receiving the measurement data from the controller 41 (step S61), the controller 51 analyzes the obtained measurement data. The analysis of the measurement data will be described with reference to FIG. 9 by taking, as an example, a case of measuring a TBNK panel.

Firstly, the cells included in the measurement data are subjected to gating on the basis of a side scattered light intensity area (SSC_A) and a first fluorescence area (FIG. 9A). The first fluorescence area is related to the fluorescence corresponding to CD45. The number of white blood cells is obtained through this processing. Side scattered lights from lymphocytes among the white blood cells have lower intensities than side scattered lights from the other white blood cells. Thus, within the gate of the white blood cells, a population is formed in an area in which the intensity of the side scattered light is low. This population of lymphocytes is specified through gating, whereby the number of the lymphocytes is obtained.

Next, the lymphocytes specified through gating are classified into CD3 positive cells and CD3 negative cells on the basis of a second fluorescence area, and the cells of each of these types are counted (FIG. 9B).

Next, the CD3 negative cells are subjected to gating on the basis of a fifth fluorescence area and a sixth fluorescence area (FIG. 9C). The fifth fluorescence area is related to the fluorescence corresponding to CD16/56, and the sixth fluorescence area is related to the fluorescence corresponding to CD19. Through this processing, the CD3 negative cells are classified into a population of CD3-CD16/56+CD19- cells (NK cells) and a population of CD3-CD16/56-CD19+ cells (B cells), and the cells of each of these populations are counted.

Next, the CD3 positive cells are subjected to gating on the basis of a third fluorescence area and a fourth fluorescence area (FIG. 9D). The third fluorescence area is related to the fluorescence corresponding to CD8, and the fourth fluorescence area is related to the fluorescence corresponding to CD4. Through this processing, the CD3 positive cells are classified into a population of CD3+CD4+CD8- cells (helper T cells) and a population of CD3+CD4-CD8+ cells (killer T cells), and the cells of each of these populations are counted.

When the number of the cells of each of these types is obtained, the controller 51 calculates a concentration C of the cells in the specimen on the basis of: the amount P of the measurement sample used for cell counting out of the measurement sample supplied to the flow cell 230, i.e., the amount of the intermediate portion; the number Q of the cells; and the dilution ratio D of the measurement sample. The concentration of the cells in the specimen is obtained on the basis of the following expression (1).

$$\text{Expression (1)} \cdots \text{concentration C of cells in specimen (cells/μL)} = \text{number Q of cells (cells)/amount P of measurement sample used for cell counting (μL)} \times \text{dilution ratio D}$$

The dilution ratio D is the dilution ratio of the measurement sample to the specimen (whole blood). As described above, the measurement sample is prepared by mixing the antibody reagent and the hemolyzing reagent with the whole blood. The quotient of the number Q of the cells in the measurement sample divided by the amount P of the measurement sample used for cell counting, i.e., the concentration of the cells in the measurement sample, is multiplied by the dilution ratio D, whereby the concentration of the cells in the specimen can be obtained. Each of dilution ratios D is prestored in the storage 54 so as to be associated with a corresponding measurement item. The controller 51 reads, according to an item regarding which a measurement instruction has been given, a corresponding dilution ratio D stored in the storage 54 and uses the dilution ratio D for the above concentration calculation.

The amount P of the measurement sample used for cell counting is stored in the storage 54 and included in the measurement condition transmitted to the measurement unit 10 by the controller 51 in step S51. As described above, the measurement condition is predetermined according to the measurement item. The controller 51 reads the amount P of the measurement sample included in the measurement condition transmitted to the measurement unit 10 and uses the amount P for the above concentration calculation.

When the analysis of the data in step S71 is finished, the controller 51 causes the display section 56 to display a measurement result in step S72.

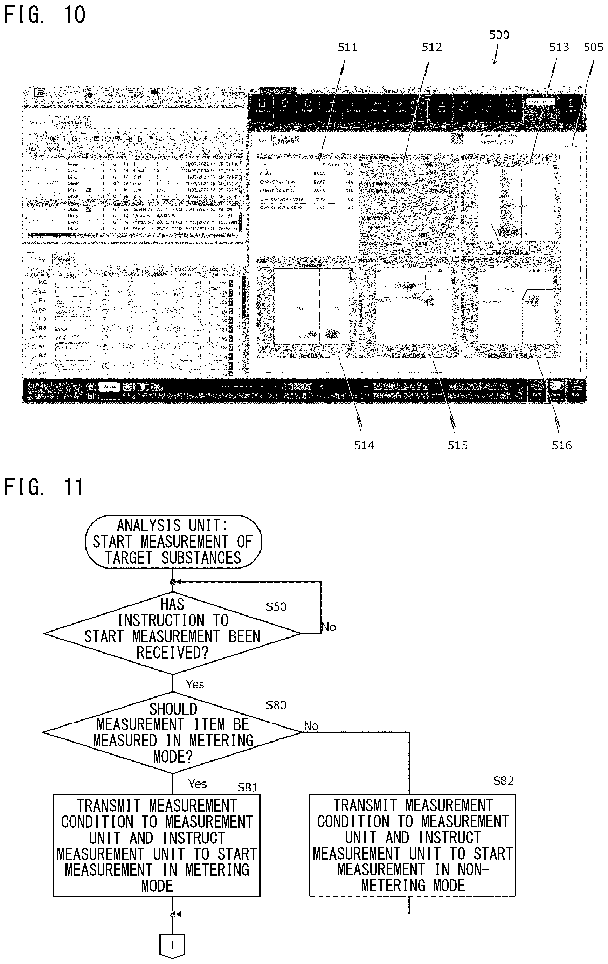

FIG. 10 shows a result screen 500 in which the measurement result is displayed. A result display window 505 of the result screen 500 includes: a result region 511 in which the concentrations of the measurement-target substances are displayed; a research parameter region 512; and plotting regions 513 to 516.

In the plotting region 513, a scattergram is displayed in which lymphocytes are extracted from among white blood cells in the measurement sample. In the plotting region 514, a scattergram is displayed in which, for T cells (CD3) among the lymphocytes, determination is performed on each of the lymphocytes as to whether the lymphocyte is a CD3 negative (CD3-) cell or a CD3 positive (CD3+) cell. In the plotting region 515, a scattergram is displayed in which, for two parameters which are helper T cells (CD4) and killer T cells (CD8) among the T cells, the CD3 positive (CD3+) cells are classified into a total of four types each of which is composed of a combination of positive or negative cells. In the plotting region 516, a scattergram is displayed in which, for two parameters which are B cells (CD19) and NK cells (CD16/56), the CD3 negative (CD3-) cells are classified into a total of four types each of which is composed of a combination of negative or positive cells.

In the result region 511, the concentration (cells/μL) of lymphocytes in each of the subsets resulting from classification correspondingly to the scattergrams shown in the plotting regions 514 to 516 is displayed. Specifically, the concentration of the CD3+ cells, the concentration of the CD3+CD4+CD8- cells, the concentration of the CD3+CD4-CD8+ cells, the concentration of the CD3-CD16/56+CD19- cells, and the concentration of the CD3-CD16/56-CD19+ cells are displayed. As described above, the concentrations described here are concentrations in the specimen, i.e., the absolute concentrations in the whole blood. A user can ascertain the concentrations of the cells in the specimen by checking the concentrations displayed in the result region 511.

In the research parameter region 512, research item-related measurement results such as the concentration based on the number of the white blood cells (CD45 positive cells), the concentration of the lymphocytes, the concentration of the CD3-cells, and the concentration of the CD3+CD4+CD8- cells are displayed.

As described above, the flow cytometer 100 according to embodiment 1 includes the metering syringe 244 and can accurately measure, on the basis of the movement amount of the piston 244p, the amount of the measurement sample supplied to the flow cell 230. The flow cytometer 100 can obtain the concentration C of target cells in the specimen on the basis of the amount P of the measurement sample used for cell counting, the number Q of the target cells, and the dilution ratio D. Therefore, the flow cytometer 100 makes it possible for a user to ascertain the concentration of the cells in the specimen without using any standard sample.

Although the flow cytometer 100 according to embodiment 1 obtains the concentration of target cells in the specimen on the basis of the amount P of the measurement sample used for cell counting, the number Q of the target cells, and the dilution ratio D, the dilution ratio D does not have to be used. In this case, a concentration C0 of target cells in the measurement sample may be obtained on the basis of the amount P of the measurement sample used for cell counting and the number Q of the target cells (in this case, the relationship of $C = C0 \times D$ is established). Alternatively, both the concentration C of the target cells in the specimen and the concentration C0 of the target cells in the measurement sample may be obtained, and, in the result screen 500, one of the concentrations C and C0 may be selectively displayed or both concentrations C and C0 may be displayed.

(Embodiment 2)

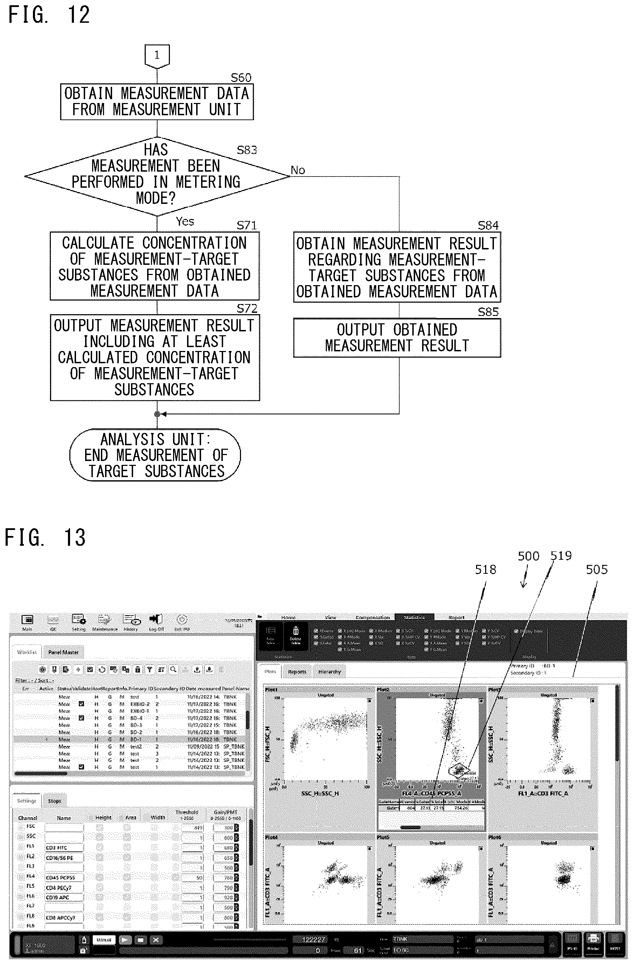

In embodiment 1, a flow cytometer has been described in which: the measurement sample is metered and supplied to the flow cell; measurement is performed; and the concentration of measurement-target substances is obtained. Meanwhile, a flow cytometer according to embodiment 2 has a metering mode in which the measurement sample is metered and a non-metering mode in which the measurement sample is not metered. The hardware configuration of the flow cytometer according to embodiment 2 is the same as that in embodiment 1. FIG. 11 and FIG. 12 are each a flowchart showing an example of a process to be executed by the controller 51 in the present embodiment correspondingly to the process in FIG. 7 in embodiment 1. In FIG. 11 and FIG. 12, the steps corresponding to those in FIG. 7 are denoted by the same reference characters. The same steps will be described in a simplified manner or will not be described.

As shown in FIG. 11, when the controller 51 receives, via the operation section 57, a measurement item set by a user and an instruction to start measurement (step S50), the controller 51 determines whether the set measurement item is an item for which measurement is to be performed in the metering mode or an item for which measurement is to be performed in the non-metering mode (step S80). Regarding each of measurement items, whether the measurement item is an item for which measurement is to be performed in the metering mode or an item for which measurement is to be performed in the non-metering mode is preset. The controller 51 determines, according to the measurement item set by the user, whether the metering mode or the non-metering mode is to be applied.

In the case of determining that measurement is to be performed in the metering mode (Yes in step S80), the controller 51 transmits the set measurement condition to the controller 41 so as to notify the controller 41 that the measurement mode is the metering mode, and gives an instruction to start measurement (step S81). Meanwhile, in the case of determining that measurement is to be performed in the non-metering mode (No in step S80), the controller 51 transmits the set measurement condition to the controller 41 so as to notify the controller 41 that the measurement mode is the non-metering mode, and gives an instruction to start measurement (step S82).

When obtaining measurement data from the measurement unit 10 in step S60 in FIG. 12, the controller 51 analyzes the obtained measurement data and outputs a measurement result according to whether or not measurement has been performed in the metering mode, i.e., according to the result of the determination in step S80 in FIG. 11 (step S83). In a case where measurement has been performed in the metering mode (Yes in step S83), the controller 51 executes an analysis process including calculation of a concentration of measurement-target substances in the same manner as in step S71 in FIG. 7, causes the display section 56 to display a measurement result including the concentration of the measurement-target substances in the same manner as in step S72 in FIG. 7, and ends the measurement process. Meanwhile, in a case where measurement has been performed in the non-metering mode (No in step S83), the controller 51 executes an analysis process for obtaining a measurement result regarding the measurement-target substances from the obtained measurement data (step S84), causes the display section 56 to display the obtained measurement result (step S85), and ends the measurement process. In the non-metering mode, the proportion of particles specified through gating among all the particles counted from the measurement-target sample is obtained as a count value of the measurement-target substances.

In the case of the metering mode, the controller 51 in the present embodiment causes the same result display window 505 as that in FIG. 10 regarding embodiment 1 to be displayed in the result screen 500. In the case of the non-metering mode, the controller 51 does not cause the concentrations of the measurement-target substances to be displayed in the result display window 505. FIG. 13 is a diagram for explaining an example of an operation screen that the controller 51 causes the display section 56 to display in the non-metering mode. As shown in FIG. 13, the controller 51 causes count values of the measurement-target substances, scattergrams, and the like to be displayed in the result display window 505 of the result screen 500 without the concentrations of the measurement-target substances being displayed. The count values of the measurement-target substances are displayed in a count value region 518. The count value region 518 includes the number of particles detected in the measurement sample (#Events) and the number of particles specified through gating with respect to the number of the detected particles (%Gated). A region 519 used in gating is displayed in a scattergram in an overlapping manner.

In the above configuration, the controller 51 starts, in the metering mode, measurement regarding the selected measurement item. However, in a case where the number of measurement-target substances having been actually measured is smaller than a recommended count number, the measurement mode may be switched to the non-metering mode. That is, a measurement result obtained in the non-metering mode may be displayed in the result display window 505 instead of the concentration of the measurement-target substances. Alternatively, in a case where the measurement sample still remains in the sample container T, the controller 51 may additionally cause execution of a suction step, a supply step, and a measurement step. By additionally executing these steps, the remaining measurement sample is suctioned from the suction nozzle 248, and measurement is performed on the additionally suctioned measurement sample. Then, a measurement result obtained by combining information about the ordinary measurement and information about the additionally performed measurement may be displayed in the result display window 505. In other words, the piston 244p which ordinarily reciprocates one time through a combination of a suction step and a supply step is caused to reciprocate a plurality of times so as to repeat suction and ejection, and insufficiency of the measurement-target substances with which the recommended count number is not reached through one time of suction and ejection is compensated for by the plurality of times of suction and ejection. Measurement can be kept being performed in the metering mode through execution of the additional suction step, the additional supply step, and the additional measurement step. Thus, measurement does not need to be redone from the beginning, whereby labor and time required for measurement, and waste of the measurement sample, can be decreased.

(Embodiment 3)

In embodiment 2, the process to be executed by the controller 41 in the non-metering mode has been described as being the same as that in the metering mode. The process that is performed by the controller 41 may differ between the metering mode and the non-metering mode. As described in embodiment 1, the controller 41 causes execution of a cleaning step after execution of the supply step and the measurement step, so as to prepare for the next measurement. The portion, of the main flow path 249, extending from the metering syringe 244 to the ejection nozzle 231 is filled with the sheath liquid through execution of the cleaning step. After the cleaning step, a low-concentration portion is present at the interface between the sheath liquid and the measurement sample suctioned from the sample container T in the suction step during the next measurement. In addition, in the subsequent supply step, a low-concentration portion is present at the interface between the sheath liquid and the foremost portion of the measurement sample flowing from the ejection nozzle 231. The amount of the metered measurement sample is obtained as the product of the movement amount of the piston 244p during measurement and the cross-sectional area, at the hollow portion, of the syringe container and is used for calculating a concentration (see expression (1)). Thus, this metering is based on the premise that the concentration in the measurement sample is fixed.

It has been indicated that, in order to perform accurate metering in the metering mode, the controller 41 causes measurement to be started after a low-concentration portion on the foremost side that flows from the ejection nozzle 231 flows through the flow cell 230. In addition, it has been indicated that the measurement is ended before a low-concentration portion generated in the aforementioned suction step (at the time of ejection to the flow cell 230, a low-concentration portion on the rearmost side) flows through the flow cell 230. In this manner, the controller 41 causes measurement to be performed within a region of a stable concentration, thereby enabling accurate calculation of a concentrations of measurement-target substances. Meanwhile, in the non-metering mode in which the measurement sample does not need to be metered, the low-concentration portion on the foremost side and the low-concentration portion on the rearmost side are included as measurement targets. Consequently, as compared to a case where these low-concentration portions are not included, a larger amount of measurement sample can be measured, and a larger amount of measurement-target substances can be measured.

According to the present embodiment, in the case of the metering mode, the controller 41 causes measurement to be performed within a region in which the concentration of the measurement sample flowing through the flow cell 230 is stable, so as to decrease a measurement error in the concentration of the measurement-target substances. Meanwhile, in the case of the non-metering mode, the controller 41 controls the timings of start and end of measurement so as to decrease the amount of the measurement sample that is not used for the measurement.

(Embodiment 4)

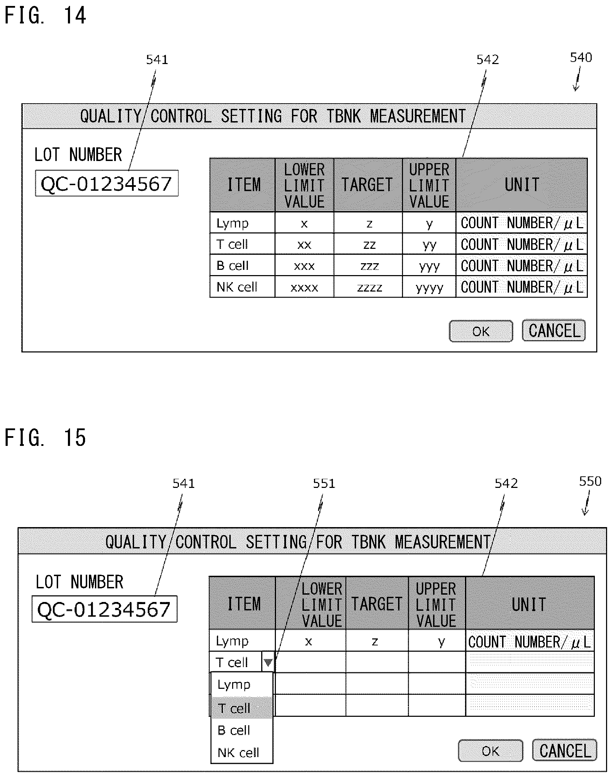

In the present embodiment, the controller 51 may have a quality control mode. In the quality control mode, the controller 51 may present a screen for receiving setting of a target value, an upper limit value, and a lower limit value for quality control in the case of performing measurement of a quality control sample. FIG. 14 shows an example of a quality control setting screen as an operation screen for setting, for each type of measurement-target substance, a target value, an upper limit value, and a lower limit value for quality control. A quality control setting screen 540 shown in FIG. 14 includes a lot number input field 541 in which the lot number of the quality control sample is inputted. The quality control setting screen 540 further includes a reference setting field 542 for setting a type of measurement-target substance (measurement item) and a target value, an upper limit value, and a lower limit value for this type of measurement-target substance. The lot number, the target value, the upper limit value, and the lower limit value are each set through input, by a user, of a value indicated on a container, a package, or a package insert for the quality control sample, for example. Alternatively, the lot number, the target value, the upper limit value, and the lower limit value may each be set by reading, with a reader connected to the analysis unit 50, a one-dimensional code or a two-dimensional code indicated on the container, the package, or the package insert.

FIG. 15 shows a quality control setting screen in a style different from that in FIG. 14. In a quality control setting screen 550 shown in FIG. 15, the controller 51 narrows down the types of measurement-target substances (measurement items) for which target values, upper limit values, and lower limit values should be set, only to types for which measurement is to be performed in the metering mode. Furthermore, in the quality control setting screen 550, the controller 51 causes these types of measurement-target substances, which have been obtained through the narrowing down, to be displayed as choices. Then, the controller 51 receives an operation, by a user, of selecting any of the displayed choices. The choices may be displayed in the form of a pull-down menu 551 as shown in FIG. 15, for example. In the present embodiment, in the case of receiving an instruction from a user and performing measurement in the quality control mode, the controller 51 outputs, as a measurement result, the concentration of the relevant component (measurement-target substances) contained in the quality control sample. Together with this concentration, the controller 51 outputs the relationship with the target value, the upper limit value, and the lower limit value which have been set in the screen shown in FIG. 14.

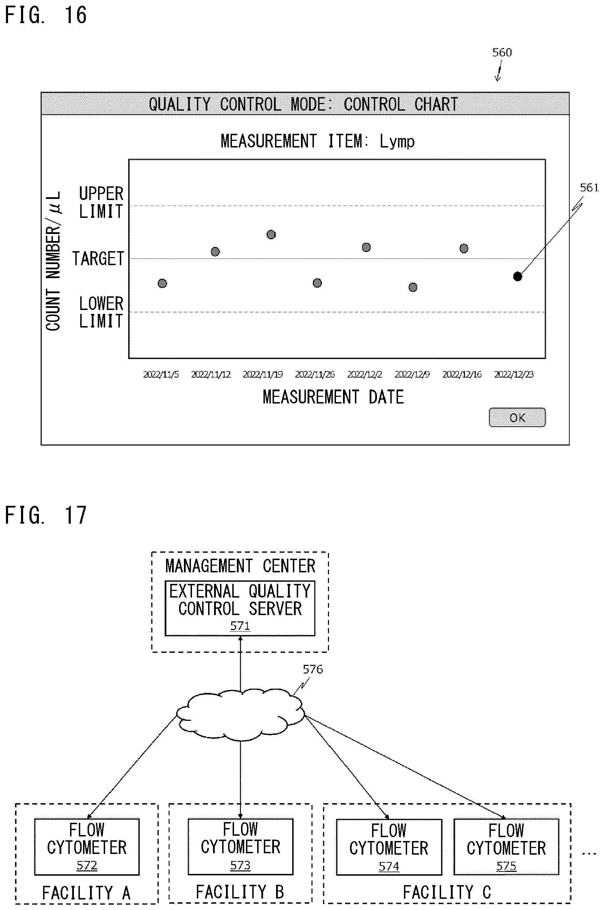

FIG. 16 is a diagram for explaining an example of a control chart screen in which the controller 51 causes a measurement result to be displayed together with histories in the quality control mode. In a control chart screen 560 shown in FIG. 16, the concentration of the measurement-target substances as a measurement result obtained with use of the quality control sample is displayed together with concentrations obtained with use of the quality control sample in the past, i.e., histories regarding the same measurement item. The graph shown in FIG. 16 has a vertical axis indicating the concentration of the measurement-target substances and a horizontal axis indicating measurement date. A rightmost measurement point 561 indicates a concentration as a measurement result obtained this time. The other points indicate previously obtained measurement results regarding the same measurement item. In addition, the target value, the upper limit value, and the lower limit value which have been set in the reference setting field 542 in FIG. 14 are displayed together. Although the control chart screen in FIG. 16 is a display example in which the measurement item is lymphocyte (Lymp), the controller 51 causes a similar control chart screen to be displayed for the other measurement items, e.g., the measurement items shown in the example in FIG. 14 which are T cell, B cell, and NK cell.

In addition to the target value, the upper limit value, and the lower limit value, whether or not the measurement result regarding the quality control sample falls within a range of the average value of the previously obtained measurement histories regarding the quality control sample $\pm$ (standard deviation $\times$ 2), is sometimes used as an index for internal quality control. In some cases, a wider range, e.g., a range of said average value $\pm$ (standard deviation $\times$ 3), is sometimes used as the index. The controller 51 may cause the index that is the average value of the measurement histories $\pm$ (standard deviation $\times$ 2) to be displayed in the control chart screen so as to be superimposed on or switchable to the above target value, upper limit value, and lower limit value. Alternatively, with an arbitrarily-determined number being defined as N, an index that is the average value of the measurement histories $\pm$ (standard deviation $\times$ N) may be displayed in the control chart screen. In this case, N can be set by a user.

A user who performs quality control periodically performs measurement for the above quality control with use of the quality control sample. Then, the user manages the specimen analyzer with reference to the control chart screen shown in FIG. 16 such that histories of measurement results substantially fall within the range between the upper limit and the lower limit. In a case where the measurement results come to frequently deviate from the range between the upper and lower limits, the user analyzes factors of the frequent deviation and takes a necessary measure. For example, the user performs maintenance of the specimen analyzer or tests the validities of various setting values related to measurement and the method for the measurement, thereby finding the aforementioned factors and taking a necessary measure.

The measurement of the quality control sample described above is applicable to not only the case of internal quality control but also the case of external quality control. Each of users participating in external quality control performs internal quality control first and manages operation of the corresponding specimen analyzer so as to obtain a highly accurate measurement result, whereby the average value of the measurement results from the respective users becomes closer to a true value. In order to perform external quality control, for example, a configuration aspect such as one shown in FIG. 17 is conceivable. A large number of specimen analyzers (e.g., flow cytometers 572 to 575 shown in FIG. 17) that are installed in hospitals, test facilities, etc. and that are being used by different users are connected via a network 576 to an external quality control server 571. The users perform measurements with use of quality control samples of the same type (preferably, of the same lot), and measurement results regarding the respective quality control samples are aggregated in the external quality control server 571 of a management center. The management center provides the aggregated information to each of the users, and each of the users performs external quality control on the corresponding specimen analyzer that is being used by the user, on the basis of the information from the management center.

Specifically, the external quality control server 571 calculates, for each type of measurement-target substance (measurement item), an average value of measured concentrations and a CV value based on the average value on the basis of measurement results obtained by measuring quality control samples of the same lot with use of the specimen analyzers of the respective users, for example. Then, the external quality control server 571 transmits the calculated results to the specimen analyzer of each of the users. Each of the users ascertains, with reference to the information received from the external quality control server 571, the extent to which measurement results from the specimen analyzer that is being used by the user differ from the information provided from the external quality control server 571. The user can, as necessary, analyze factors of the error from the information provided from the external quality control server 571 and take a necessary measure. The function of assisting the user in performing quality control of the specimen analyzer has been described as above.

Aspects of the present disclosure also include an aspect in which some of the above plurality of aspects are combined. In addition to the aforementioned embodiments, various modifications of the present disclosure are possible. Such modifications should not be considered as being excluded from the scope of the present disclosure. The present disclosure should include meaning equivalent to the scope of the claims and all the modifications.

[Remarks]

The present disclosure includes the following items 1-13.

Item 1: A flow cytometer comprising:

a flow cell;

a sample supply part configured to supply, to the flow cell, a predetermined amount of a measurement sample prepared by mixing a specimen containing measurement-target substances and a labeled antibody which binds to the measurement-target substances;

a light source configured to apply light to the measurement sample passing through the flow cell;

a detector configured to detect lights derived from the measurement-target substances contained in the measurement sample to which the light has been applied, and output signals; and

an analysis unit configured to count the measurement-target substances contained in the measurement sample on the basis of the signals and obtain a concentration of the measurement-target substances on the basis of the number of the counted measurement-target substances and the predetermined amount.

Item 2: The flow cytometer of item 1, wherein
the sample supply part includes a metering syringe and supplies the predetermined amount of the measurement sample by the metering syringe.

Item 3: The flow cytometer of item 2, wherein
the metering syringe has a syringe container and a piston, and supplies the predetermined amount of the measurement sample through movement, by a predetermined amount, of the piston.

Item 4: The flow cytometer of item 3, wherein

the sample supply part further includes

a suction nozzle configured to suction the measurement sample and
a flow path connecting the suction nozzle, the flow cell, and the metering syringe to each other, and

the sample supply part

pulls the piston of the metering syringe, to draw the measurement sample to the flow path and
pushes the piston, to supply the measurement sample to the flow cell.

Item 5: The flow cytometer of item 1, wherein
the analysis unit obtains the concentration on the basis of the number of the measurement-target substances and an amount of the measurement sample used for counting the measurement-target substances, the amount of the measurement sample being based on the predetermined amount.

Item 6: The flow cytometer of item 1, wherein

the sample supply part suctions the measurement sample to a flow path filled with a sheath liquid and supplies the measurement sample to the flow cell through which the sheath liquid flows, and
the analysis unit

counts the measurement-target substances contained in an intermediate portion obtained by excluding, from the predetermined amount of the measurement sample, a first portion supplied first to the flow cell and a second portion supplied last to the flow cell, and
obtains the concentration on the basis of an amount obtained by subtracting an amount of the first portion and an amount of the second portion from the predetermined amount.

Item 7: The flow cytometer of item 1, further comprising a display section configured to display the concentration.

Item 8: The flow cytometer of item 1, wherein
the analysis unit obtains a concentration of the measurement-target substances in the specimen.

Item 9: The flow cytometer of item 1, wherein
the analysis unit obtains a concentration of the measurement-target substances in the measurement sample.

Item 10: The flow cytometer of item 1, wherein
the analysis unit is configured to be selectively operated in either a first mode in which the concentration is presented as a measurement result regarding the measurement-target substances or a second mode in which a count value of the measurement-target substances is presented as a measurement result regarding the measurement-target substances.

Item 11: A sample measurement method comprising:

supplying, to a flow cell, a predetermined amount of a measurement sample prepared by mixing a specimen containing measurement-target substances and a labeled antibody which binds to the measurement-target substances;

applying light to the measurement sample passing through the flow cell;

detecting lights derived from the measurement-target substances contained in the measurement sample to which the light has been applied, and outputting signals; and

counting the measurement-target substances contained in the specimen on the basis of the signals and obtaining a concentration of the measurement-target substances on the basis of the number of the counted measurement-target substances and the predetermined amount.

Item 12: A flow cytometer comprising:

a flow cell;

a metering syringe configured to suction a measurement sample prepared by mixing a specimen containing measurement-target substances and a labeled antibody which binds to the measurement-target substances, and supply the suctioned measurement sample to the flow cell;

a light source configured to apply light to the measurement sample passing through the flow cell;

a detector configured to detect lights derived from the measurement-target substances contained in the measurement sample to which the light has been applied, and output signals; and

an analysis unit configured to count the measurement-target substances contained in the measurement sample on the basis of the signals and obtain a concentration of the measurement-target substances on the basis of the number of the counted measurement-target substances and an amount of the measurement sample used for counting the measurement-target substances.

Item 13: A sample measurement method comprising:

supplying a measurement sample to a flow cell by a metering syringe, the measurement sample being prepared by mixing a specimen containing measurement-target substances and a labeled antibody which binds to the measurement-target substances;

applying light to the measurement sample passing through the flow cell;

detecting lights derived from the measurement-target substances contained in the measurement sample to which the light has been applied, and outputting signals; and

counting the measurement-target substances contained in the specimen on the basis of the signals and obtaining a concentration of the measurement-target substances on the basis of the number of the counted measurement-target substances and an amount of the measurement sample used for counting the measurement-target substances.

DESCRIPTION OF THE REFERENCE CHARACTERS

10 measurement unit
12 rack
13 accommodation part
20 fluid circuit
20a, 20b, 20c light source
30 measurement optical system
30a, 30b, 30c, 30d, 30e, 30f, 30g, 30h, 30i, 30j, 30k, 30l, 30n, 30o, 30p detector
40 signal processing section
41, 51 controller
42, 54 storage
43, 44 interface section
50 analysis unit
52 main memory
53 bus
55 interface section
56 display section
57 operation section
100, 572 to 575 flow cytometer
230 flow cell
231 ejection nozzle

240 sample supply part
241, 247, 250 valve
242 sheath liquid chamber
243 pressure device
244 metering syringe
244p piston
245 waste liquid chamber
246 motor
248 suction nozzle
249 main flow path
301a, 301b, 301c collimator lens
302, 304a, 304b condenser lens
303a, 303b, 308a, 308b, 308c, 308d, 308e, 308f, 308g, 308h, 308i, 308j, 308k, 308l, 308m, 308n dichroic mirror
305a beam stopper
305b pinhole plate
307b, 307c, 307d, 307e, 307f, 307g, 307h, 307i, 307j, 307k, 307l, 307m, 307n, 307o, 307p band-pass filter
401 amplification part
402 A/D conversion part
403 waveform processing part
500 result screen
505 result display window
511 result region
512 research parameter region
513, 514, 515, 516 plotting region
518 count value region
540, 550 quality control setting screen
541 lot number input field
542 reference setting field
551 pull-down menu
560 control chart screen
561 measurement point
571 external quality control server
576 network
T sample container

## Claims

1. A flow cytometer comprising:

   a flow cell;
   a sample supply part configured to supply, to the flow cell, a predetermined amount of a measurement sample prepared by mixing a specimen containing measurement-target substances and a labeled antibody which binds to the measurement-target substances;
   a light source configured to apply light to the measurement sample passing through the flow cell;
   a detector configured to detect lights derived from the measurement-target substances contained in the measurement sample to which the light has been applied, and output signals; and
   an analysis unit configured to count the measurement-target substances contained in the measurement sample on the basis of the signals and obtain a concentration of the measurement-target substances on the basis of the number of the counted measurement-target substances and the predetermined amount.

2. The flow cytometer of claim 1, wherein
   the sample supply part includes a metering syringe and supplies the predetermined amount of the measurement sample by the metering syringe.

3. The flow cytometer of claim 2, wherein
   the metering syringe has a syringe container and a piston, and supplies the predetermined amount of the measurement sample through movement, by a predetermined amount, of the piston.

**4.** The flow cytometer of claim 3, wherein

the sample supply part further includes

a suction nozzle configured to suction the measurement sample and
a flow path connecting the suction nozzle, the flow cell, and the metering syringe to each other, and

the sample supply part

pulls the piston of the metering syringe, to draw the measurement sample to the flow path and
pushes the piston, to supply the measurement sample to the flow cell.

**5.** The flow cytometer of any one of claims 1 to 4, wherein
the analysis unit obtains the concentration on the basis of the number of the measurement-target substances and an amount of the measurement sample used for counting the measurement-target substances, the amount of the measurement sample being based on the predetermined amount.

**6.** The flow cytometer of any one of claims 1 to 5, wherein

the sample supply part suctions the measurement sample to a flow path filled with a sheath liquid and supplies the measurement sample to the flow cell through which the sheath liquid flows, and
the analysis unit

counts the measurement-target substances contained in an intermediate portion obtained by excluding, from the predetermined amount of the measurement sample, a first portion supplied first to the flow cell and a second portion supplied last to the flow cell, and
obtains the concentration on the basis of an amount obtained by subtracting an amount of the first portion and an amount of the second portion from the predetermined amount.

**7.** The flow cytometer of any one of claims 1 to 6, further comprising a display section configured to display the concentration.

**8.** The flow cytometer of any one of claims 1 to 7, wherein
the analysis unit obtains a concentration of the measurement-target substances in the specimen.

**9.** The flow cytometer of any one of claims 1 to 8, wherein
the analysis unit obtains a concentration of the measurement-target substances in the measurement sample.

**10.** The flow cytometer of any one of claims 1 to 9, wherein
the analysis unit is configured to be selectively operated in either a first mode in which the concentration is presented as a measurement result regarding the measurement-target substances or a second mode in which a count value of the measurement-target substances is presented as a measurement result regarding the measurement-target substances.

**11.** A sample measurement method comprising:

supplying, to a flow cell, a predetermined amount of a measurement sample prepared by mixing a specimen containing measurement-target substances and a labeled antibody which binds to the measurement-target substances;
applying light to the measurement sample passing through the flow cell;
detecting lights derived from the measurement-target substances contained in the measurement sample to which the light has been applied, and outputting signals; and
counting the measurement-target substances contained in the specimen on the basis of the signals and obtaining a concentration of the measurement-target substances on the basis of the number of the counted measurement-target substances and the predetermined amount.

**12.** A flow cytometer comprising:

a flow cell;

a metering syringe configured to suction a measurement sample prepared by mixing a specimen containing measurement-target substances and a labeled antibody which binds to the measurement-target substances, and supply the suctioned measurement sample to the flow cell;

a light source configured to apply light to the measurement sample passing through the flow cell;

a detector configured to detect lights derived from the measurement-target substances contained in the measurement sample to which the light has been applied, and output signals; and

an analysis unit configured to count the measurement-target substances contained in the measurement sample on the basis of the signals and obtain a concentration of the measurement-target substances on the basis of the number of the counted measurement-target substances and an amount of the measurement sample used for counting the measurement-target substances.

13. A sample measurement method comprising:

supplying a measurement sample to a flow cell by a metering syringe, the measurement sample being prepared by mixing a specimen containing measurement-target substances and a labeled antibody which binds to the measurement-target substances;

applying light to the measurement sample passing through the flow cell;

detecting lights derived from the measurement-target substances contained in the measurement sample to which the light has been applied, and outputting signals; and

counting the measurement-target substances contained in the specimen on the basis of the signals and obtaining a concentration of the measurement-target substances on the basis of the number of the counted measurement-target substances and an amount of the measurement sample used for counting the measurement-target substances.

14. The method of claim 13, wherein the specimen is a blood and the measurement-target substance is particular type of white blood cell.

15. The method of claim 14, wherein the particular type of white blood cell is T cell, B cell, and NK cell.

16. The method of any one of claims 13 to 15, wherein the measurement sample is without counting beads.

FIG. 1

FIG. 2

FIG. 3

FIG. 4

SIGNAL PROCESSING SECTION 40

| WAVEFORM PROCESS-ING PART 403 | A/D CONVERSION PART 402 | AMPLIFI-CATION PART 401 |

CON-TROLLER 41

STORAGE 42

ANALY-SIS UNIT 50

INTER-FACE SECTION 44

INTER-FACE SECTION 43

MEASUREMENT OPTICAL SYSTEM 30

30a~30p

DETECTOR

FLUID CIRCUIT 20

10

FIG. 5

ANALYSIS UNIT 50

CONTROLLER 51

MAIN MEMORY 52

BUS 53

STORAGE 54

INTERFACE SECTION 55

DISPLAY SECTION 56

OPERATION SECTION 57

MEASUREMENT UNIT 10

FIG. 6A

START POINT      END POINT

SAMPLING PERIOD

FIG. 6B

| Event No. | FSC_H | FSC_A | SSC_H | SSC_A | FL1_H | FL1_A | FL2_H | ········ | FL14_A |
|-----------|-------|-------|-------|-------|-------|-------|-------|----------|--------|
| 1 | | | | | | | | | |
| 2 | | | | | | | | | |
| 3 | | | | | | | | | |
| · · · | | | | | | | | | |
| n | | | | | | | | | |

# FIG. 7

ANALYSIS UNIT:
START CONCENTRATION
MEASUREMENT IN
METERING MODE

MEASUREMENT UNIT:
START MEASUREMENT

HAS INSTRUCTION TO START MEASUREMENT BEEN RECEIVED WITH MEASUREMENT CONDITION BEING SET? — S50 — No

Yes — S51

TRANSMIT MEASUREMENT CONDITION TO MEASUREMENT UNIT AND INSTRUCT MEASUREMENT UNIT TO START MEASUREMENT

HAVE MEASUREMENT CONDITION AND INSTRUCTION TO START MEASUREMENT BEEN RECEIVED? — S10 — No

Yes

STORE RECEIVED MEASUREMENT CONDITION IN DATA STORAGE — S12

SUCTION MEASUREMENT SAMPLE — S15

SUPPLY MEASUREMENT SAMPLE TO FLOW CELL AND EXECUTE OPTICAL MEASUREMENT — S18

HAS MEASUREMENT DATA BEEN RECEIVED? — S61 — No

PROVIDE MEASUREMENT DATA — S21

Yes

CALCULATE CONCENTRATION OF MEASUREMENT-TARGET SUBSTANCES FROM OBTAINED MEASUREMENT DATA — S71

OUTPUT MEASUREMENT RESULT — S72

MEASUREMENT UNIT:
END MEASUREMENT

ANALYSIS UNIT:
END CONCENTRATION
MEASUREMENT IN
METERING MODE

# FIG. 8

S18
SUPPLY MEASUREMENT
SAMPLE TO FLOW CELL
AND EXECUTE OPTICAL
MEASUREMENT

S181
START SUPPLYING SHEATH
LIQUID AND APPLY LIGHTS
FROM LIGHT SOURCES

S182
MOVE PISTON IN EJECTION
DIRECTION AND SUPPLY
MEASUREMENT SAMPLE TO
FLOW CELL

S183
HAS
FIRST PORTION BEEN
SUPPLIED?

No

Yes

S184
START OPTICAL MEASUREMENT

S185
HAS
INTERMEDIATE PORTION
BEEN SUPPLIED?

No

Yes

S186
STOP OPTICAL MEASUREMENT

S187
SUPPLY SECOND PORTION
AND STOP PISTON

TO S21

FIG. 9A

FIG. 9B

FIG. 9C

FIG. 9D

FIG. 10

FIG. 11

```
     ANALYSIS UNIT:
  START MEASUREMENT OF
   TARGET SUBSTANCES
```

HAS INSTRUCTION TO START MEASUREMENT BEEN RECEIVED? — S50 — No

Yes

SHOULD MEASUREMENT ITEM BE MEASURED IN METERING MODE? — S80 — No

Yes — S81

TRANSMIT MEASUREMENT CONDITION TO MEASUREMENT UNIT AND INSTRUCT MEASUREMENT UNIT TO START MEASUREMENT IN METERING MODE

S82

TRANSMIT MEASUREMENT CONDITION TO MEASUREMENT UNIT AND INSTRUCT MEASUREMENT UNIT TO START MEASUREMENT IN NON-METERING MODE

1

FIG. 12

①

S60
OBTAIN MEASUREMENT DATA
FROM MEASUREMENT UNIT

S83
HAS
MEASUREMENT BEEN
PERFORMED IN METERING
MODE?

No

Yes S71
CALCULATE CONCENTRATION
OF MEASUREMENT-TARGET
SUBSTANCES FROM OBTAINED
MEASUREMENT DATA

S72
OUTPUT MEASUREMENT RESULT
INCLUDING AT LEAST
CALCULATED CONCENTRATION
OF MEASUREMENT-TARGET
SUBSTANCES

S84
OBTAIN MEASUREMENT RESULT
REGARDING MEASUREMENT-
TARGET SUBSTANCES FROM
OBTAINED MEASUREMENT DATA

S85
OUTPUT OBTAINED
MEASUREMENT RESULT

ANALYSIS UNIT:
END MEASUREMENT OF
TARGET SUBSTANCES

FIG. 13

FIG. 14

541                     542     540

### QUALITY CONTROL SETTING FOR TBNK MEASUREMENT

LOT NUMBER

QC-01234567

| ITEM | LOWER LIMIT VALUE | TARGET | UPPER LIMIT VALUE | UNIT |
|------|-------------------|--------|-------------------|------|
| Lymp | x | z | y | COUNT NUMBER/$\mu$L |
| T cell | xx | zz | yy | COUNT NUMBER/$\mu$L |
| B cell | xxx | zzz | yyy | COUNT NUMBER/$\mu$L |
| NK cell | xxxx | zzzz | yyyy | COUNT NUMBER/$\mu$L |

OK    CANCEL

FIG. 15

541         551            542     550

### QUALITY CONTROL SETTING FOR TBNK MEASUREMENT

LOT NUMBER

QC-01234567

| ITEM | LOWER LIMIT VALUE | TARGET | UPPER LIMIT VALUE | UNIT |
|------|-------------------|--------|-------------------|------|
| Lymp | x | z | y | COUNT NUMBER/$\mu$L |
| T cell ▼ | | | | |
| Lymp | | | | |
| T cell | | | | |
| B cell | | | | |
| NK cell | | | | |

OK    CANCEL

FIG. 16

560

QUALITY CONTROL MODE: CONTROL CHART

MEASUREMENT ITEM: Lymp

561

COUNT NUMBER/μL

UPPER
LIMIT

TARGET

LOWER
LIMIT

2022/11/5   2022/11/12   2022/11/19   2022/11/26   2022/12/2   2022/12/9   2022/12/16   2022/12/23

MEASUREMENT DATE

OK

FIG. 17

MANAGEMENT CENTER

EXTERNAL QUALITY
CONTROL SERVER
571

576

FLOW
CYTOMETER
572

FACILITY A

FLOW
CYTOMETER
573

FACILITY B

FLOW
CYTOMETER
574

FLOW
CYTOMETER
575

FACILITY C

...

EP 4 400 826 A1

Europäisches
Patentamt
European
Patent Office
Office européen
des brevets

# EUROPEAN SEARCH REPORT

**Application Number**

EP 24 15 1175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/147860 A1 (KADUCHAK GREGORY [US] ET AL) 29 May 2014 (2014-05-29) | 1-5,7-16 | INV. G01N15/1429 |
| Y | * paragraphs [186.187], [0202] * | 6 | G01N15/14 G01N35/02 |
| X | US 2015/140577 A1 (LI NAN [US] ET AL) 21 May 2015 (2015-05-21) | 1-5,7-16 | G01N35/10 |
| Y | * paragraphs [0048], [0073] * | 6 | ADD. G01N15/01 |
| X | CN 108 169 104 A (B&E BIO TECH CO LTD) 15 June 2018 (2018-06-15) | 1-4, 6-13,16 | G01N35/04 G01N15/10 |
| Y | * section "Flow Cytometry" * | 6 | |
| Y | US 2011/262896 A1 (BLECKA LAWRENCE [US] ET AL) 27 October 2011 (2011-10-27) * paragraph [0092] * | 6 | |

**TECHNICAL FIELDS SEARCHED (IPC)**

G01N

The present search report has been drawn up for all claims

| Place of search | Date of completion of the search | Examiner |
|---|---|---|
| The Hague | 23 May 2024 | Kramer, Joanne |

EPO FORM 1503 03.82 (P04C01)

## ANNEX TO THE EUROPEAN SEARCH REPORT
## ON EUROPEAN PATENT APPLICATION NO.                     EP 24 15 1175

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | | Publication date | Patent family member(s) | | Publication date |
|---|---|---|---|---|---|
| US 2014147860 | A1 | 29-05-2014 | EP | 2724160 A2 | 30-04-2014 |
| | | | US | 2014147860 A1 | 29-05-2014 |
| | | | WO | 2013003498 A2 | 03-01-2013 |
| US 2015140577 | A1 | 21-05-2015 | CN | 105917211 A | 31-08-2016 |
| | | | EP | 3071951 A2 | 28-09-2016 |
| | | | US | 2015140577 A1 | 21-05-2015 |
| | | | US | 2017138856 A1 | 18-05-2017 |
| | | | WO | 2015077349 A2 | 28-05-2015 |
| CN 108169104 | A | 15-06-2018 | NONE | | |
| US 2011262896 | A1 | 27-10-2011 | AU | 2004258218 A1 | 27-01-2005 |
| | | | CA | 2532790 A1 | 27-01-2005 |
| | | | CA | 2949524 A1 | 27-01-2005 |
| | | | EP | 1656543 A2 | 17-05-2006 |
| | | | EP | 2413136 A1 | 01-02-2012 |
| | | | US | 2005123445 A1 | 09-06-2005 |
| | | | US | 2007189925 A1 | 16-08-2007 |
| | | | US | 2011262896 A1 | 27-10-2011 |
| | | | US | 2013216454 A1 | 22-08-2013 |
| | | | WO | 2005008219 A2 | 27-01-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023004034 A

- US 10261072 B

**Non-patent literature cited in the description**

- V Flow System. **GENRI NYUUMON KOUZA ; V HUROO KEI.** Introductory Lesson on Principles of FCM'' of ''Technical Information about Flow Cytometry. Beckman Coulter, Inc, 15 December 2022

- VIII. Data Processing System. **GENRI NYUUMON KOUZA ; DEETA SYORI KEI.** Introductory Lesson on Principles of FCM'' of ''Technical Information about Flow Cytometry. Beckman Coulter, Inc, 15 December 1992